# EUROPEAN PATENT APPLICATION

(11) **EP 4 675 034 A2**
(43) Date of publication of application: **07.01.2026**
(21) Application number: 25217204.4
(22) Date of filing: 17.06.2022
(51) Int. Cl.: D06F 39/12

(54) **LAUNDRY TREATMENT APPARATUS AND CONTROLLING METHOD FOR THE SAME**

(30) Priority: 21.06.2021 KR 20210080226
(62) Divisional of application: 22828672.0
(71) Applicant: LG Electronics Inc., Yeongdeungpo-gu Seoul 07336 (KR)
(72) Inventor: JOO, Hyojin, 08592 Seoul (KR); KIM, Younghoon, 08592 Seoul (KR); KIM, Mangeun, 08592 Seoul (KR); HWANG, Jinseong, 08592 Seoul (KR)
(74) Representative: Schornack, Oliver

(57) **Abstract**

A laundry treatment apparatus includes a cabinet, a drum that is rotatably provided inside the cabinet, a support panel provided on a front surface of the drum, and an infrared sensor installed on the support drum, provided in a direction facing the drum, and configured to receive heat inside the drum, wherein the infrared sensor measures a temperature inside the drum, is disposed at a center based on right and left sides of the drum, and is disposed at an upper end of the support panel.

## Description

### [Technical Field]

The present disclosure relates to a laundry treatment apparatus and a control method for the same, and more particularly to a laundry treatment apparatus and a control method for the same for determining whether clothes are dried using an infrared sensor.

### [Background Art]

A laundry treatment apparatus is a generic term for a washing machine for washing clothes (a laundry object, or a drying object), a dryer for drying clothes, and an apparatus capable of both washing and drying clothes.

The washing machine includes a tub for storing water, a washing drum provided inside the tub to store clothes, and a driver (washing driver) for rotating the washing drum, and the dryer includes a drying drum for storing clothes, a driver (drying driver) for rotating the drying drum, and a heat exchanger for supplying air to the drying drum to remove moisture from clothes. A variety of products with a drying function have also released as washing machines.

In general, the washing driver includes a stator fixed to the tub to form a rotating field, a rotor rotating by a rotating field, and a rotating shaft for connecting the washing drum and the rotor through the tub, but the drying driver includes a motor, a pulley fixed to the rotating shaft of the motor, and a belt (power transmitter) for connecting a rotational motion of the pulley to the drying drum. Needless to say, technology using the stator and the rotor is also applied to the drying driver as well as the washing driver.

Conventionally, Korean Patent Registration No. 10-0747589 discloses a method of determining a drying level of clothes using an electrode sensor. An electrode sensor outputs a voltage signal corresponding to impedance generated upon contact with a drying object, determines the drying level of the clothes according to the output voltage value, and ends a drying cycle when determining that the clothes are sufficiently dried.

Conventionally, when the drying level of clothes is determined, the drying level varies depending ton clothes in contact, and thus it is difficult to accurately determine the drying level.

### [Disclosure]

### [Technical Problem]

An object of the present disclosure devised to solve the problem lies on a laundry treatment apparatus and a control method for the same for improving measurement of a drying level of clothes using an infrared sensor for measuring heat generated from the clothes.

Another object of the present disclosure devised to solve the problem lies on a laundry treatment apparatus and a control method for the same for preventing clothes from being excessively dried by virtue of improved accuracy.

A further object of the present disclosure devised to solve the problem lies on a laundry treatment apparatus and a control method for the same for preventing a user from being inconvenienced by terminating a drying cycle even if clothes are not sufficiently dried, by virtue of improved accuracy.

### [Technical Solution]

To achieve the object of the present disclosure, a drying level may be determined by measuring a temperature (by detecting heat) using an infrared sensor.

An infrared sensor may be arranged at the center of an upper end of a support panel of a laundry treatment apparatus, a washing machine with a drying function, or a drying machine. The infrared sensor may be arranged to be inclined, and thus may be arranged to face the center of a rear surface of a drum.

The infrared sensor may include a flat portion at the center of a front surface thereof, and the flat portion may be thinner than the remaining portion, thereby increasing transmittance of infrared rays to the inside of the infrared sensor. The flat portion may not be convex but may have a flat shape, and thus may be arranged to prevent clothes from getting caught when a drum rotates.

The infrared sensor may include a light source, i.e., an LED for increasing illuminance inside the drum. An error due to heat generated by an LED may be reduced by setting a time difference between an operation of the LED and detection of the infrared sensor.

According to the present disclosure, a drying level may be determined using the infrared sensor. The drying level may be calculated by calculating a temperature amplitude of clothes, calculating a reference value, and then calculating the two ratios.

It may be difficult to determine the drying level using only the temperature amplitude of the clothes, and thus the reference value may also be considered, and in this regard, a dry cloth may have a small temperature amplitude, and a wet cloth may have a large temperature amplitude. The first ratio of the two ratios may be calculated using a final value of one cycle, and the second ratio may be calculated using a temperature of a duct or a temperature of the clothes measured by the infrared sensor.

The present disclosure may newly improve a method of calculating the temperature amplitude, and the temperature amplitude may be calculated using a new method of calculating an absolute value using a value obtained through a low-pass filter rather than a temperature difference between a previous time and a current time.

According to the present disclosure, a reference value for classification into a wet cloth and a dry cloth is changed rather than being fixed, and thus an error of erroneously determining that drying is performed at an early stage may be reduced (in the beginning, the temperature amplitude is small, and thus the temperature may be likely to be equal to or less than a reference value even if most clothes include a wet cloth)

According to the present disclosure, a drying level may be determined by combining an infrared sensor and an electrode sensor. That is, the electrode sensor may detect a drying level, may set an end time, and may terminate drying when the drying level is measured and then drying is completed using the infrared sensor for a predetermined time before the set end time. In this case, when it is determined that drying is not completed by the infrared sensor, an expected drying end time may be delayed.

In the state in which drying is almost completed, when drying is temporarily stopped due to opening of a door, it may be difficult to measure the drying level again (because, when an electrode value measured by an electrode sensor is equal to or greater than a predetermined value, it is not possible to determine whether drying is completed any longer). In this case, according to the present disclosure, non-drying may be prevented via supplementation using the infrared sensor.

The present disclosure may provide a method of controlling a laundry treatment apparatus including measuring a temperature of clothes, calculating a temperature amplitude according to the measured temperature of the clothes, classifying a temperature amplitude according to a reference value to classify the clothes into dry and wet clothes, calculating a first ratio as a ratio of the dry and wet clothes of the clothes, calculating a second ratio for normalizing the measured temperature, and determining a drying level of the clothes using the first ratio and the second ratio.

The temperature of the clothes may be measured by an infrared sensor.

The temperature of the clothes may be changed over time.

The first ratio may be measured at a predetermined time interval.

The first ratio may be calculated every time at an end of a predetermined time.

The first ratio may be calculated as a time ratio of the wet cloth and the dry cloth within a reference time.

The first ratio may be calculated by subtracting a value obtained by dividing a time of determination for the wet cloth by a time of determination for the dry cloth, from 1.

The first ratio may be calculated by subtracting a ratio of an accumulate value of a temperature amplitude of the wet cloth and the dry cloth within a reference time, from 1.

The first ratio may be calculated by subtracting a value obtained by dividing an accumulate value of a temperature amplitude of the dry cloth by an accumulate value of a temperature amplitude of the wet cloth, from 1.

The first ratio may be calculated by subtracting a value obtained by dividing the accumulate value of the temperature amplitude of the wet cloth by a value obtained by multiplying a time of determination for the dry cloth and the reference value, from 1.

The second ratio may be calculated by setting a first temperature as a low temperature and a second temperature as a high temperature and normalizing the measured temperature within a range of 0 to 1 based on the first temperature and the second temperature.

The first temperature may be set to be lower than the measured temperature.

The second temperature may be set to be higher than the measured temperature.

The first temperature may be set to be higher than an outside temperature of the laundry treatment apparatus.

The determining the drying level may include multiplying the first ratio and the second ratio.

When the drying level reaches a predetermined value, drying may be determined to be completely dried.

When a time at which the drying level reaches a predetermined value is maintained for a predetermined time, drying may be determined to be completely dried.

When drying is determined to be completely dried, a drying cycle may be terminated after additional drying is performed during a predetermined time.

The present disclosure provides a laundry treatment apparatus including a cabinet, a drum that is rotatably provided inside the cabinet, a support panel provided on a front surface of the drum; and an infrared drum installed on the support drum, provided in a direction facing the drum, and configured to receive heat inside the drum, and in this case, the infrared sensor may measure a temperature inside the drum, the infrared sensor may be disposed at the center based on right and left sides of the drum, and the infrared sensor may be disposed at an upper end of the support panel.

The infrared sensor may include a cover disposed on a front thereof, a sensor unit, and a holder for fixing the sensor unit.

The sensor unit may include a PCB, a sensing unit provided in the PCB to detect an infrared ray, and an LED for emitting light.

The infrared sensor may further include a controller for controlling the infrared sensor, and the controller may not use the temperature detected by the sensing unit while the LED operates.

The controller may perform control using the temperature detected using the sensing unit when a predetermined time elapses after the LED operates.

The plurality of LEDs may be provided.

The cover may include a flat portion provided on a front surface thereof, and the flat portion may be arranged in parallel to the sensor unit.

The flat portion may be arranged to be inclined downward, and may be provided to face the rear surface of the drum.

A depression may be formed in the rear of the flat portion, and may be thinner than a periphery.

The flat portion may have a flat shape.

The cover may include a rib for fixing an installation angle of the sensor unit, and the rib may include a first member disposed on an upper side, and a second member spaced apart from the first member and disposed on a lower side.

Since the first member is shorter than the second member, the sensor unit may be fixed to be inclined.

The cover may include a fixing groove, and the holder may include a protrusion inserted into the fixing groove.

The cover may be provided with a flange formed along a front circumference, and the flange may surface-contact the support panel and may be coupled to the support panel.

The cover may be formed of a polypropylene (PP) material, and may be formed via an injection process.

An electrode sensor for measuring a voltage signal corresponding to impedance while in contact with the clothes accommodated in the drum may be provided.

The present disclosure may provide a method of controlling a laundry treatment apparatus including measuring a temperature of clothes, calculating a temperature amplitude by processing the measured temperature of the clothes using a low-pass filter, classifying a temperature amplitude according to a reference value to classify the clothes into dry and wet clothes, calculating a first ratio as a ratio of the dry and wet clothes of the clothes, calculating a second ratio for normalizing the measured temperature, and determining a drying level of the clothes using the first ratio and the second ratio.

The low-pass filter may be capable of attenuating a high frequency of the measured temperature of the clothes.

The calculating the temperature amplitude may include subtracting the temperature value obtained the low-pass filter from the measured temperature of the clothes.

The calculating of the temperature amplitude may include calculating an absolute value of the subtracted temperature value.

The low-pass filter may be calculated according to a temperature of the clothes over time.

The present disclosure may provide a method of controlling a laundry treatment apparatus including measuring a temperature of clothes, calculating a temperature amplitude according to the measured temperature of the clothes, classifying the clothes into dry and wet clothes by comparing the temperature amplitude with a reference value, calculating a first ratio as a ratio of the dry and wet clothes of the clothes, calculating a second ratio for normalizing the measured temperature, and determining a drying level of the clothes using the first ratio and the second ratio.

In the classifying the clothes into the dry and wet clothes, when the measured temperature amplitude of the clothes is greater than the reference value, the corresponding clothes may be determined to be a wet cloth, and when the measured temperature amplitude of the clothes is smaller than the reference value, the corresponding clothes may be determined to be a dry cloth.

The reference value may be calculated according to the calculated temperature amplitude over time by a low-pass filter.

The reference value may be changed over time.

The reference value may be maintained constant when a predetermined time elapses.

The second ratio may be calculated by setting a first temperature as a low temperature and a second temperature as a high temperature and normalizing the measured temperature within a range of 0 to 1 based on the first temperature and the second temperature.

When the second ratio is 1, the reference value may be maintained constant.

The present disclosure may provide a method of controlling a laundry treatment apparatus including measuring a temperature of clothes, calculating a temperature amplitude according to the measured temperature of the clothes, classifying a temperature amplitude according to a reference value to classify the clothes into dry and wet clothes, calculating a first ratio as a ratio of the dry and wet clothes of the clothes, calculating a second ratio for normalizing the measured temperature, a first determination operation of determining a drying level of clothes using the first ratio and the second ratio, and a second determination operation of determining the drying level of the clothes according to a voltage signal measured by an electrode sensor, and in this case, when both the first determination operation and the second determination operation are satisfied, the determination of the drying level may be classified into a final determination operation of determining that drying is completed.

In the final determination operation, when any one of the first determination operation and the second determination operation is not satisfied, it may be possible to determine that the drying is not completed.

In the first determination operation, when the time at which the drying level reaches a predetermined value is maintained for a predetermined time, a first expected end time may be selected.

In the second determination operation, when a drying level reaches a predetermined value, a second expected end time may be selected.

In the final determination operation, it may be determined that drying is completed at the later of the first expected end time and the second expected end time.

In the first determination operation, the first expected end time may be selected as a time at which the first setting time has elapsed from a time at which the drying level reaches a predetermined value.

In the first determination operation, the predetermined time may be shorter than the first setting time.

In the second determination operation, when the drying level reaches a predetermined value, an expected end time may be selected.

The first determination operation may be performed before a second setting time based on the expected end time.

In the first determination operation, when the time at which the drying level reaches a predetermined value is maintained for a predetermined time, drying may be terminated at the expected end time.

In the final determination operation, when the time at which the drying level reaches a predetermined value is not maintained for a predetermined time, the expected end time may be delayed by a third setting time.

### [Advantageous Effects]

According to the present disclosure, a drying level of clothes may be accurately measured, and thus the clothes may be prevented from being excessively dried. It is possible to prevent the clothes from being dried and to prevent unnecessary energy from being transferred to the clothes, thereby preventing energy efficiency from being lowered.

According to the present disclosure, the drying level of the clothes may be accurately measured, and thus a possibility to provide clothes that are not properly dried may be lowered.

### [Description of Drawings]

The accompanying drawings, which are included to provide a further understanding of the disclosure, illustrate embodiments of the disclosure and together with the description serve to explain the principle of the disclosure.

In the drawings:
FIGS. 1 and 2 are diagrams showing an example of a laundry treatment apparatus;
FIGS. 3 and 4 are diagrams showing an example of an internal structure of a laundry treatment apparatus;
FIG. 5 is a diagram for specifically explaining a position at which an infrared sensor is installed;
FIG. 6 is a diagram for explaining a position of a support panel, at which an infrared sensor is installed;
FIG. 7 is an exploded perspective view of an infrared sensor;
FIG. 8 is a cross-sectional view of an infrared sensor;
FIG. 9 is a diagram for explaining components of the present embodiment;
FIG. 10 is a diagram for explaining a drying process of clothes;
FIG. 11 is a diagram for explaining a control flow according to an embodiment;
FIGS. 12 to 30 are diagrams for specifically explaining a process of determining a drying level while drying clothes;
FIG. 31 is a diagram for explaining an end time of a drying cycle according to an embodiment; and
FIG. 32 is a diagram for explaining an end time of a drying cycle according to another embodiment.

### [Best Mode]

A laundry treatment apparatus will be described in detail to embodiments of the present disclosure, examples of which are illustrated in the accompanying drawings.

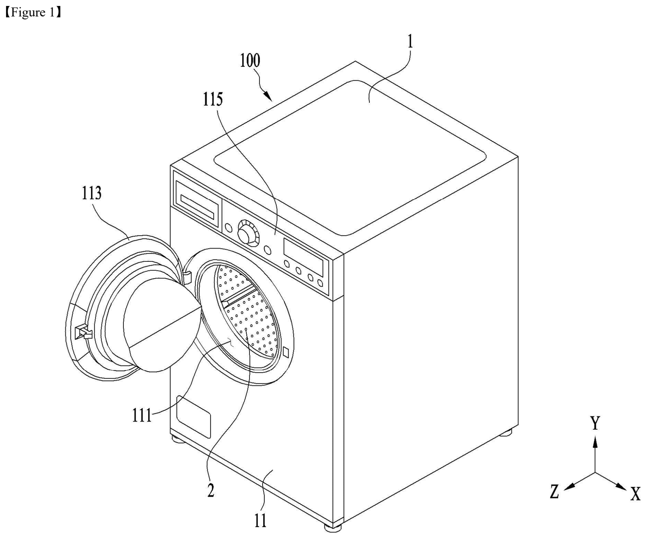

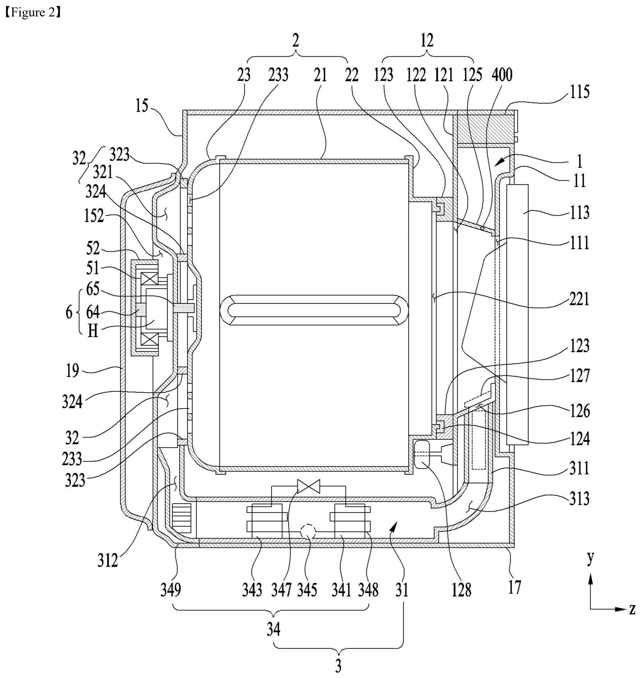

FIG. 1 illustrates an example of a laundry treatment apparatus 100. The laundry treatment apparatus 100 includes a cabinet 1, and a drum 2 that is rotatably provided inside the cabinet to provide a space for storing clothes (laundry or drying objects). As shown in FIG. 2, a dryer 3 for supplying high-temperature dry air (air with a temperature higher than room temperature or air with a drying level higher than that of the room air) to the drum 2 to remove moisture from the clothes may be provided inside the cabinet 1.

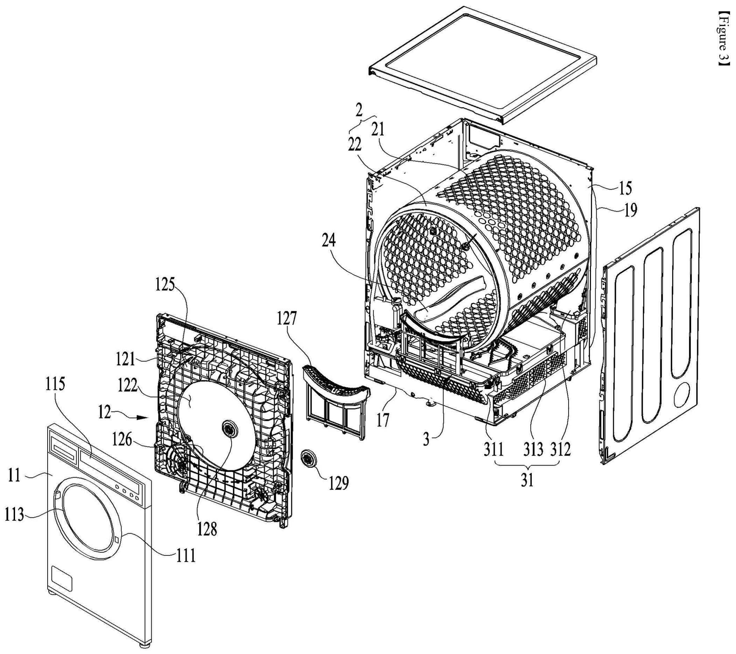

As shown in FIG. 3, the cabinet 1 may include a front panel 11 forming a front surface of the laundry treatment apparatus, and a base panel 17 forming a bottom surface of the laundry treatment apparatus. The front panel 11 may be provided with an inlet 111 connected to the drum 2, and the inlet 111 may be provided to be closed by a door 113.

The front panel 11 may be provided with a control panel 115, and the control panel 115 may include an input interface for receiving a control command from a user, and a display for outputting information such as a control command to be selected by the user. The input interface may include a power supply requester for requesting power supply to the laundry treatment apparatus, a course input interface for enabling the user to select a desired course among a plurality of courses, and an execution requester for requesting start of the course selected by the user.

The drum 2 may be provided in a cylindrical shape with an empty interior. FIG. 2 illustrates an example in which the drum 2 includes a drum body 21 having a cylindrical shape with open front and rear surfaces, a front cover 22 forming a front surface of the drum body 21, and a rear cover 23 forming a rear surface of the drum body 21. The front cover 22 may include a drum inlet 221 for connecting the inside of the drum body 21 to the outside, and an air inlet 233 for introducing outside air into the drum body 21.

As shown in FIG. 3, the drum body 21 may include a lifter 24. In the lifter 24, a board extending from the front cover 22 toward the rear cover 23 may protrude toward a center of rotation of the drum 2 (a center of rotation of the drum from a circumferential surface of the drum) from the drum body 21.

When the laundry treatment apparatus 100 is provided as a device for drying clothes only, the drum 2 may not include a drum through hole provided to penetrate the drum body 21 in order to connect the inside of the drum to the outside of the drum.

The drum 2 may be rotatably fixed to at least one of a first body support 12 or a second body support 15. The drawing illustrates an example in which the rear cover 23 is rotatably fixed to the second body support 15 through a motor 5 (a driver), and the front cover 22 is rotatably connected to the first body support 12.

The first body support 12 may include a support panel 121 that is fixed to the cabinet 1 and is positioned between the front panel 11 and the front cover 22. The support panel 121 may be fixed to the base panel 17 and positioned between the front panel 11 and the front cover 22. In this case, a rear surface (a surface facing the support panel) of the front panel 11 may be fixed to the support panel 121, and a lower end thereof may be fixed to the base panel 17.

The support panel 121 may include a support panel through-hole 122, and a drum connection body 123 (refer to FIG. 2) for connecting the support panel through-hole 122 and the drum inlet 221, and a panel connection body 125 for connecting the support panel through-hole 122 and the inlet 111. The support panel through-hole 122 may be provided to pass through the support panel 121 and may connect the inlet 111 and the drum inlet 221.

As shown in FIG. 2, the drum connection body 123 may be provided as a pipe fixed to a rear surface of the support panel 121 (a surface facing the drum inlet in a space provided by the support panel). One end of the drum connection body 123 may be provided to surround the support panel through-hole 122, and a free end of the drum connection body 123 may be provided to support the front cover 22. That is, the free end of the drum connection body 123 may be inserted into the drum inlet 221 or may be provided to contact the free end of the front cover 22 forming the drum inlet 221.

FIG. 2 illustrates an example in which the free end of the drum connection body 123 contacts the free end of the front cover 22. In this case, the drum connection body 123 may be provided with a ring-shaped connection damper 124. The connection damper 124 is a device for minimizing the risk of the drum inlet 221 being separated from the drum connection body 123 when the drum 2 rotates or vibrates (the risk of air leaking into the cabinet).

The panel connection body 125 may be provided as a pipe fixed to the front surface of the support panel 121 (a surface facing the front panel among spaces provided by the support panel). One end of the panel connection body 125 may be provided to surround the support panel through-hole 122, and the other end of the panel connection body 125 may be provided to be connected to the inlet 111. Accordingly, clothes supplied to the inlet 111 may be moved to the drum body 21 through the panel connection body 125, the support panel through-hole 122, the drum connection body 123, and the drum inlet 221.

The support panel 121 may be provided with an exhaust port 126 penetrating the panel connection body 125, and a filter 127 may be detachably fixed to the exhaust port 126. The filter 127 may have any structure as long as foreign substances is capable of being filtered from the air moving from the drum 2 to the exhaust port 126.

The support panel 121 may further include drum supporters 128 and 129 for preventing the drum 2 from sagging. The drum support may be provided to include a first roller 128 and a second roller 129 that are fixed to the support panel 121 to rotatably support the drum 2. FIG. 3 illustrates the case in which the first roller 128 and the second roller 129 support the drum body 21, but the rollers 128 and 129 may support the front cover 22.

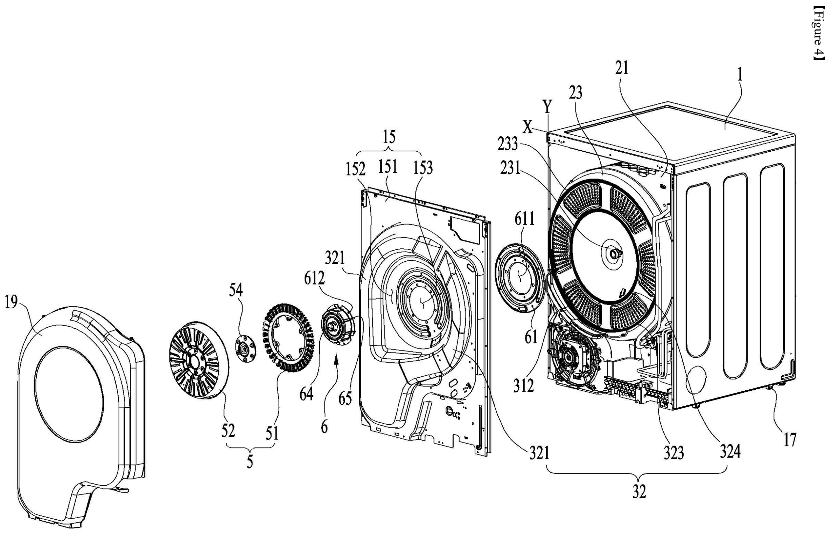

The second body support 15 may include a fixed panel 151 fixed to the cabinet 1 to be positioned at a point spaced apart from the rear cover 23. FIG. 4 illustrates an example in which the fixing panel 151 is fixed to the base panel 17 to form a rear surface (a rear surface of the cabinet) of the laundry treatment apparatus 100.

The fixed panel 151 may be provided with a driver installation groove 152 that provides a space in which the motor 5 is mounted. The driver installation groove 152 may be provided as a groove in which the fixed panel 151 is concavely bent toward the rear cover 23 of the drum. The fixed panel 151 may be provided with a fixed panel through-hole 153 through which a shaft (output shaft) for rotating the drum 2 passes, and the fixed panel through-hole 153 may be positioned inside the driver installation groove 152.

As described above, when the drum 2 includes the drum body 21, the front cover 22 fixed to the drum body, and the rear cover 23 fixed to the drum body, the rigidity of the drum may be increased compared to a structure in which open front and rear surfaces of the drum body 21 are respectively connected to the support panel 121 and the fixed panel 151, respectively. When the rigidity of the drum is increased, it is possible to minimize deformation of the drum body 21 when the drum rotates, and it may be possible to minimize a problem of clothes getting caught in a space between the drum body and the support panel and a space between the drum body and the fixed panel when the drum body 21 is deformed (it may be possible to minimize the load of the motor).

As shown in FIG. 2, the dryer 3 may include an exhaust passage 31 connected to the exhaust port 126, a supply passage 32 for guiding air inside the exhaust passage 31 to the drum body 21, and a heat exchanger 34 provided inside the exhaust passage 31 and to sequentially perform dehumidification and heating of the air.

The exhaust passage 31 may include a first duct 311 connected to the exhaust port 126, a second duct 312 connected to the supply passage 32, and a third duct 313 for connecting the first duct 311 and the second duct 312. The third duct 313 may be fixed to the base panel 17.

The heat exchanger 34 may include various devices capable of sequentially performing dehumidification and heating of air introduced into the exhaust passage 31, and FIG. 2 illustrates an example in which the heat exchanger 34 includes a heat pump. That is, the heat exchanger 34 may include a first heat exchanger (a heat absorber 341) for removing moisture from the air introduced into the exhaust passage 31, a second heat exchanger (a heater 343) provided inside the exhaust passage 31 to heat air passing through the heat absorber 341, and a fan 349 for moving air discharged from the drum 2 to a supply duct 321 through after sequentially passing through the heat absorber and the heater.

The heat absorber 341 and the heater 343 may be sequentially arranged along a moving direction of air, and may be connected to each other through a refrigerant pipe 348 forming a circulation path of a refrigerant. The refrigerant may move along the refrigerant pipe 348 by a compressor 345 positioned outside the exhaust passage 31, and the refrigerant pipe 348 may include a pressure regulator 347 for adjusting a pressure of the refrigerant.

As shown in FIG. 4, the air inlet 233 provided in the rear cover 23 of the drum may be configured by arranging a plurality of holes to surround the center (the center of rotation of the drum) of the rear cover 23. In this case, the supply passage 32 may be provided in the fixed panel 151, and may include the supply duct 321 for forming a movement path of air discharged from the second duct 312, and a first flow path forming part 323 and a second flow path forming part 324 that guide air inside the supply duct 321 to the air inlet 233.

The supply duct 321 may be provided in such a way that the fixed panel 151 is bent in a direction away from the rear cover 23 to form a flow path (a movement path of air). The supply duct 321 may be provided in a ring shape surrounding the driver installation groove 152, and the second duct 312 may be connected to a circumferential surface of the supply duct 321.

The first flow path forming part 323 may be provided to surround an outer circumferential surface of a ring formed by the air inlets 233, and the second flow path forming part 324 may be provided to surround an inner circumferential surface of the ring formed by the air inlets 233.

The first flow path forming part 323 and the second flow path forming part 324 may be fixed to the rear cover 23 or may be fixed to the supply duct 321, and FIG. 4 illustrates an example in which the flow path forming parts 323 and 324 are fixed to the rear cover 23. In FIG. 4, a free end of the first flow path forming part 323 may be provided to surround an outer circumferential surface of a flow path (ring-shaped flow path) formed by the supply duct 321, and the free end of the second flow path forming part 324 may be provided to surround an inner circumferential surface of a flow path formed by the supply duct 321. The first flow path forming part 323 and the second flow path forming part 324 may be formed of rubber or felt.

The motor 5 for rotating the drum 2 may include a stator 51 positioned at the driver installation groove 152 to form a rotating field, and a rotor 52 rotated by the rotating field. A rotational motion of the rotor 52 may be transmitted to the drum 2 through a power transmitter 6 fixed to the fixed panel 151, and the stator 51 may be fixed to at least one of the fixed panel 151 or the power transmitter 6. When the stator 51 is fixed to the power transmitter 6, there is an advantageous effect in maintaining the coaxiality of an input shaft 65 and an output shaft 66 that are provided on the power transmitter 6 (it may be possible to minimize vibration of the laundry treatment apparatus when the drum is rotated and it may be possible to minimize deterioration of the durability of the power transmitter).

In order to prevent the motor 5 provided in the driver installation groove 152 from being exposed to the outside (in order to improve the durability of the motor and to prevent safety accidents by preventing the motor from being exposed to an external environment), the fixed panel 151 may further include a cover panel 19 for preventing the motor 5 from being exposed to the outside. The cover panel 19 may be provided in a shape for preventing the supply duct 321 from being exposed to the outside (a shape surrounding the supply duct). This may be for minimizing escape of heat to the outside of the supply duct 321 as well as for preventing a safety accident that may occur when a body comes into contact with the supply duct 321.

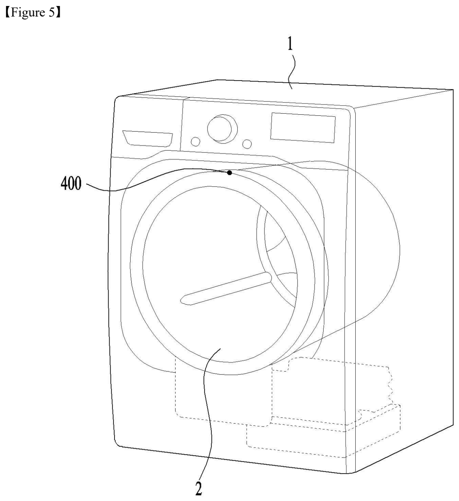

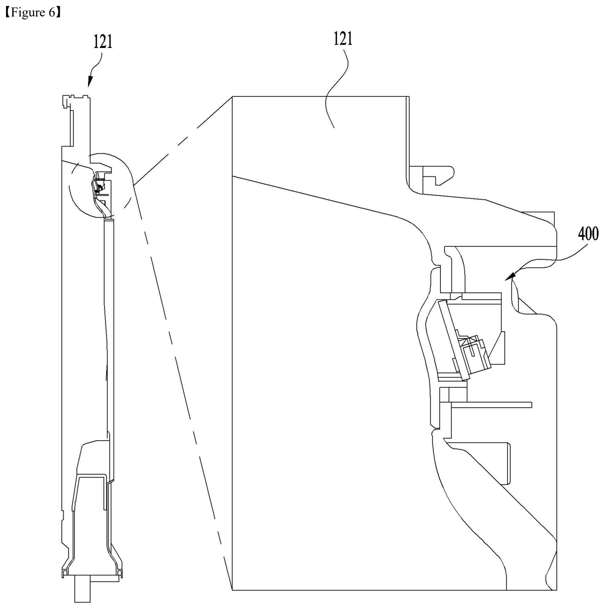

FIG. 5 is a diagram specifically illustrating a position at which an infrared sensor is installed. FIG. 6 is a diagram illustrating a position at which an infrared sensor is installed on a support panel.

As shown in FIGS. 2, 5, and 6, the support panel 121 may include an infrared sensor 400. The infrared sensor 400 may be provided in the panel connection body 125 of the support panel 121. The infrared sensor 400 may be provided in a direction facing the drum 2 and may receive heat inside the drum 2.

In this case, the infrared sensor 400 may measure a temperature inside the drum 2, and the infrared sensor 400 may be disposed in the center of right and left directions of the drum 2 to detect the temperature of clothes moving inside the drum 2. Since the drum 2 has a cylindrical shape, the infrared sensor 400 may detect the entire heat inside the drum 2.

The infrared sensor 400 may be disposed on the top of the support panel 121, and thus may be disposed to view the inside of the drum 2 as a whole.

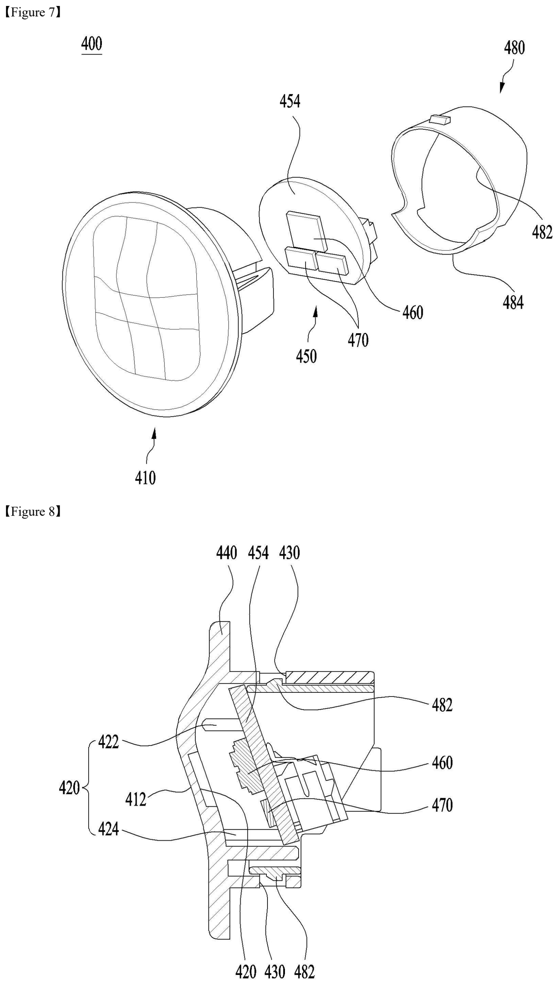

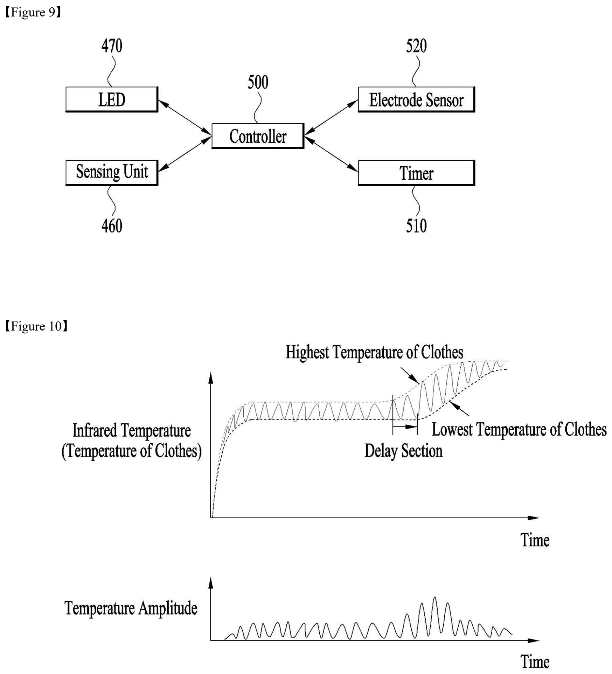

FIG. 7 is an exploded perspective view of an infrared sensor, FIG. 8 is a cross-sectional view of an infrared sensor, and FIG. 9 is a diagram for explaining components of the present embodiment.

Referring to FIGS. 7 to 9, the infrared sensor 400 may include a cover 410 disposed in front, a sensor unit 450, and a holder 480 for fixing the sensor unit 450.

The cover 410 may be disposed in front of the sensor unit 450, and the holder 480 is disposed in the rear of the sensor unit 450. The sensor unit 450 may be disposed between the cover 410 and the holder 480.

The sensor unit 450 may include a PCB 454, a sensing unit 460 provided in the PCB 454 to detect an infrared ray, and an LED 470 for emitting light.

The sensing unit 460 and the LED 470 may be disposed on the PCB 454, and power may be supplied to the LED 470 or a signal generated by the sensing unit 460 may be transmitted.

The LED 470 may emit light to the inside of the drum 2. When a user opens a door, the LED 470 may be driven to illuminate the inside of the drum and to allow the user to see the inside of the drum. The plurality of LEDs 470 may be provided, and thus it may be possible to ensure a sufficient amount of light to sufficiently illuminate the inside of the drum.

The sensing unit 460 may detect an infrared ray flowing through the cover 410, and may detect the temperature of clothes being dried inside the drum as well as inside the drum. The sensing unit 460 may detect the temperature inside the drum as a whole by detecting the infrared ray of a predetermined area toward a rear surface of the drum rather than a specific point.

The cover 410 may include a flat portion 412 provided on a front surface, the flat portion 412 may be disposed in parallel to the sensor unit 450. In detail, the front and rear of the flat portion 412 may be formed in parallel to the PCB 454 of the sensor unit 450. The sensing unit 460 may be mounted on the PCB 454, and since the sensing unit 460 is placed on the flat PCB 454, the sensing unit 460 may also be disposed in parallel to the flat portion 412.

The flat portion 412 may be arranged to protrude with respect to the front surface of the cover 410, which means that the flat portion 412 forms a lower side of a protruding portion.

The flat portion 412 may be arranged to be inclined downward, and may be provided to face the rear surface of the drum. The flat portion 412 may have a planar shape. Since the flat portion 412 does not form a curved shape in which any one point protrudes with respect to the other portion, clothes may be prevented from being caught in the flat portion 412 while being moved in the drum. Accordingly, it may be possible to prevent a specific portion of the flat portion 412 from being relatively worn out over time as the specific portion of the flat portion 412 is worn out due to clothes.

A depression 420 may be formed in the rear of the flat portion 412 and may be thinner than a periphery. Thus, the infrared ray easily penetrates into the sensing unit 460 through the depression 420, and thus the sensing unit 460 may easily detect the infrared ray.

Since the depression 420 forms a concave shape at the rear of the flat portion 412, a protruding shape of the sensing unit 460 may be disposed due to the depression 420, and a space for installing the sensing unit 460 may be ensured.

The cover 410 may include a rib 420 for fixing an installation angle of the sensor unit 450. The rib 420 may protrude toward the rear of the cover 410, and thus one end of the rib 420 may be disposed to contact the sensor unit 450.

The rib 420 may include a first member 422 disposed on an upper side, and a second member 424 spaced apart from the first member 422 and disposed on a lower side. The first member 422 and the second member 424 may protrude from a rear surface of the cover 410 in a rectangular shape, and thus one end of each of first member 422 and the second member 424 may extend to contact the PCB 454.

Since the first member 422 is shorter than the second member 424, the sensor unit 450 may be fixed to be inclined. In this case, the sensor unit 450 may be disposed to face downward when the sensing unit 460 is installed, and thus the sensing unit 460 may face downward rather than backward of the drum.

The holder 480 may be in contact in the other side of the PCB 454, on which the LED 470 is not disposed, thereby fixing the installation angle of the PCB 454. That is, the front side of the PCB 454 may be pressed by the rib 420, and the rear side of the PCB 454 may be pressed by the holder 480, and thus the position and arrangement angle of the PCB 454 may be determined.

The cover 410 may include a fixing groove 430, and the holder 480 may include a protrusion 482 inserted into the fixing groove 430. The fixing groove 430 may be provided at the rear of a portion of the cover 410, on which the PCB 454 is disposed. Thus, a position at which the fixing groove 430 and the protrusion 482 are coupled may be positioned at the rear of the PCB 454.

The holder 480 may have a cylindrical shape with a hole formed in the center as a whole, thereby ensuring a space in which an electric wire is to be connected to the sensor unit 450. The wire extending from the PCB 454 may be arranged to pass through the central portion of the holder 480.

A first surface 482 of the holder 480 may support the rear surface of the PCB 454. The PCB 454 may be pressed by the first surface 482, and thus a position and an installation angle between the holder 480 and the cover 410 may be fixed.

A second surface 484 of the holder 480 may be inserted into a slit provided in the cover 410. The protrusion 482 protruding outward from the second surface 484 may be provided, and thus may be inserted into the fixing groove 430 formed in the cover 410.

That is, the protrusion 482 may be formed on both the upper side and the lower side of the holder 480, and the fixing groove 430 may also formed on both the upper side and the lower side of the cover 410, and thus the cover 410 and the holder 480 may be coupled at both upper and lower sides.

The cover 410 may be provided with a flange 440 formed along a front circumference, and the flange 440 may surface-contact the support panel 121 and may be coupled to the support panel 121. The flange 440 is disposed on an outer side of the flat portion 412 in such a way that a surface of the cover 410 is enlarged to prevent moisture remaining in the clothes from flowing into the rear of the cover 410. That is, a front surface of the cover 410 may extend to the flange 440 with respect to the flat portion 412, and the extending portion of the flange 440 may be larger than the size of the PCB 454. Accordingly, the flange 440 may extend out of the PCB 454, and the rear surface of the flange 440 may contact and engage the support panel 121.

The cover 410 may be formed of a polypropylene (PP) material, and may be formed via an injection process. Accordingly, the cover 410 may pass through the cover 410 to prevent water from flowing into the PCB 454.

An electrode sensor 520 for measuring a voltage signal corresponding to impedance while in contact with the clothes accommodated in the drum may be provided. A signal collected by the electrode sensor 520 may be transmitted to a controller 500, and thus the controller 500 may determine a drying level of the clothes based on the electrode sensor 520.

The controller 500 may not use the temperature detected by the sensing unit 460 while the LED 470 operates. When the LED 470 is driven and emits light to the drum, the temperature inside the drum may be increased due to heat generated by the LED 470. That is, since the LED 470 generates noise to accurately measure the temperature inside the drum, the controller 500 may not detect the temperature through the sensing unit 460 when the LED 470 operates.

When a predetermined time elapses after the LED 470 operates, the controller 500 may perform control using the temperature detected by the sensing unit 460. When the LED 470 is driven, heat may be generated by the LED 470, and in this regard, even if the LED 470 stops driving, the heat applied by the LED 470 may not disappear immediately. Accordingly, in order to increase the accuracy of the temperature measured by the sensing unit 460, the temperature may be detected through the sensing unit 460 when a predetermined time elapses after the LED 470 operates.

The controller 500 may measure passage of time through a timer 510. When the sensing unit 460 detects the temperature, it may be possible to process a signal by sensing a temperature change over time by the timer 510.

FIG. 10 is a diagram for explaining a drying process of clothes.

As seen from FIG. 10, when the temperature of the clothes dried in the drum is measured by the infrared sensor as the clothes are dried, a pattern shown in FIG. 10 may be formed.

That is, as the drying time elapses, the overall temperature of clothes tends to rise. However, there are several pieces of clothes in the drum, and a drying speed of the clothes is different depending on the type, size, or position of the clothes. That is, there may be a case in which clothes are dried in the same drum for the same time, but some clothes are dried while others are not dried.

As a drying time of the clothing elapses, the temperature of the clothes measured by the infrared sensor 400 may be changed while having the temperature amplitude within the maximum and minimum temperatures of clothes and the minimum temperature of the clothes. As the drum rotates, the clothes are dried, and depending on arrangement of the clothes, when measured with the infrared sensor 400, the temperature may be measured high at a predetermined moment, while the temperature is again measured low after the moment has elapsed. When temperature is measured according to time by the infrared sensor 400, it may be possible to define a highest measured temperature as a highest temperature of the clothes and a lowest measured temperature as a lowest temperature of the clothes. The temperature of the clothes may be changed according to the measurement time within the range of the highest temperature and the lowest temperature.

In an initial stage of drying, the highest temperature of clothes and the lowest temperature of clothes rise rapidly compared to time, but when a predetermined time elapses, temperature rise may be delayed. There may be a section in which a rate of increase of the highest temperature of clothes is faster than a rate of increase of the lowest temperature of clothes measured by the infrared sensor while drying is performed. In this section, a transitional section in which a drying level increases may be defined as a delay section.

When drying is continuously performed and passes the delay section, the lowest temperature of the clothes and the highest temperature of the clothes converge to each other, and the clothes may be sufficiently dried. As several pieces of clothes are all dried inside the drum, a change in the temperature measured by the infrared sensor 400 may be reduced even if the position of the clothes is changed as the drum is rotated.

A difference between the highest temperature of clothes and the lowest temperature of clothes may be defined as the temperature amplitude, and when the temperature amplitude is represented over time, the temperature amplitude may be represented as shown in FIG. 10. Since all the clothes put into the drum are not dried while drying is first started, the temperature of all clothes is equally low and the temperature amplitude is small. When drying is completed, since all clothes put into the drum are completely dried, it may be seen that the temperature of all clothes is uniformly high and the temperature amplitude is small. It may be seen that the temperature amplitude slightly increases during drying compared to the initial and latter stages of drying.

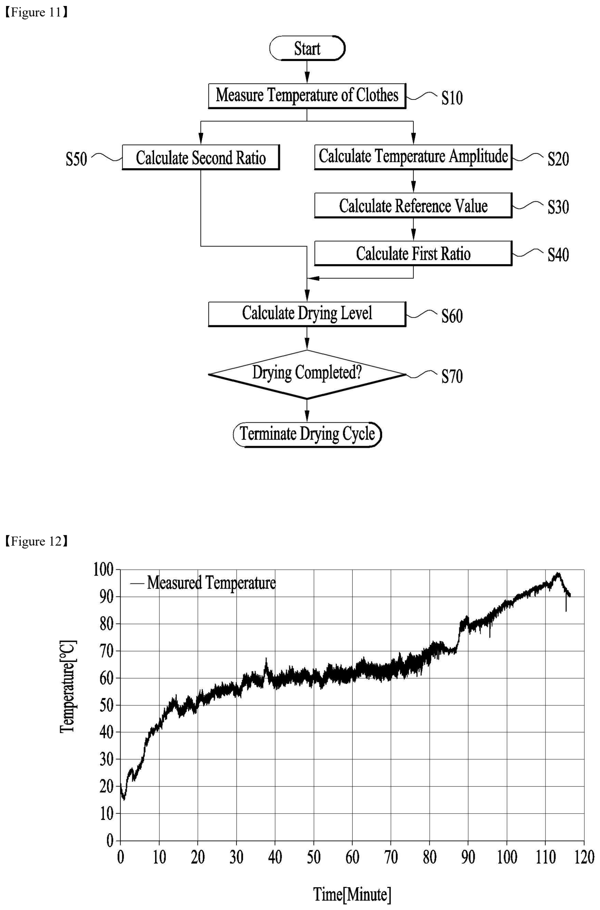

FIG. 11 is a diagram for explaining a control flow according to an embodiment, and FIGS. 12 to 30 are diagrams for specifically explaining a process of determining a drying level while drying clothes.

Overall, a method of determining a drying level of clothes may include measuring a temperature of clothes, calculating a temperature amplitude according to the measured temperature of the clothes, classifying the temperature amplitude according to a reference value to classify the clothes into dry and wet clothes, calculating a first ratio as a ratio of the dry and wet clothes of the clothes, calculating a second ratio for normalizing the measured temperature, and determining the drying level of the clothes using the first ratio and the second ratio.

First, drying of the clothes may start after washing of the clothes is completed. On the other hand, in order to dry only clothes, a drying cycle may be started after the clothes are put into the laundry treatment apparatus.

While the clothes are dried, the controller 500 may measure the temperature of the clothes inside the drum through the infrared sensor 400 (S10). The drum 2 may be continuously rotated to provide hot air to the clothes or air with low humidity and to remove moisture contained in the clothes from the clothes.

As shown in FIG. 12, while the clothes are dried, the temperature measured by the infrared sensor 400 may be changed while a time elapses. It may be seen that the temperature measured by the infrared sensor rises over time. According to the present embodiment, the drying level of the clothes may be determined by measuring the temperature changed over time.

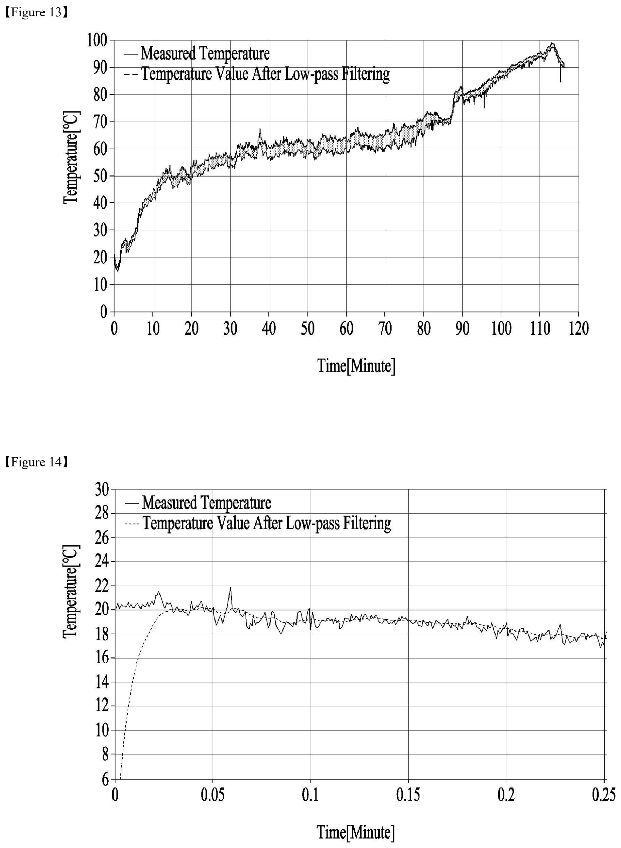

The temperature amplitude may be measured using the measured temperature value (S20). As shown in FIG. 13, the temperature value may be obtained by low-pass filtering the measured infrared temperature. A part indicated with a dotted line may be a value obtained by processing the measured infrared temperature using a low-pass filter. FIG. 14 is an enlarged view of a part corresponding to the beginning of FIG. 13.

In this case, the used low-pass filter may be capable of attenuating a high frequency of the measured temperature of the clothes. When highest and lowest values of the measured temperature of the clothes fluctuate greatly, there may be a high possibility of false noise. Thus, consistency of data may be improved by removing unnecessary noise using a low-pass filter. The temperature value obtained through the low-pass filter may be used to determine the change in the temperature of the clothes within a range of the measured temperature of the clothes.

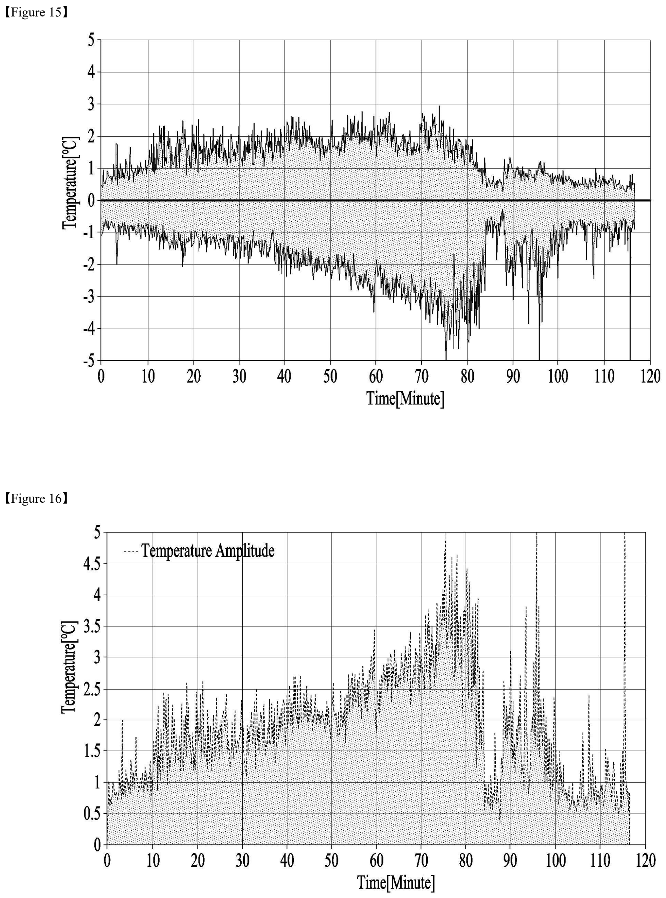

FIG. 15 is a diagram showing distribution of measured infrared temperature values based on a value obtained through the low-pass filter. The calculating the temperature amplitude may include subtracting the temperature value obtained the low-pass filter from the measured temperature of the clothes.

Then, as shown in FIG. 16, the calculating of the temperature amplitude may include calculating an absolute value of the subtracted temperature value. That is, absolute values of low and high values of the temperature of the clothes may be obtained based on the value obtained through the low-pass filter. Only the magnitude of the temperature of clothes measured over time absolute value may be represented by calculating the absolute value, and thus the temperature amplitude may be calculated as shown in FIG. 16. That is, the low-pass filter may be calculated according to the temperature value of the clothes over time.

The value obtained through the low-pass filter may change as the drying level of the clothes changes and the temperature of the clothes changes.

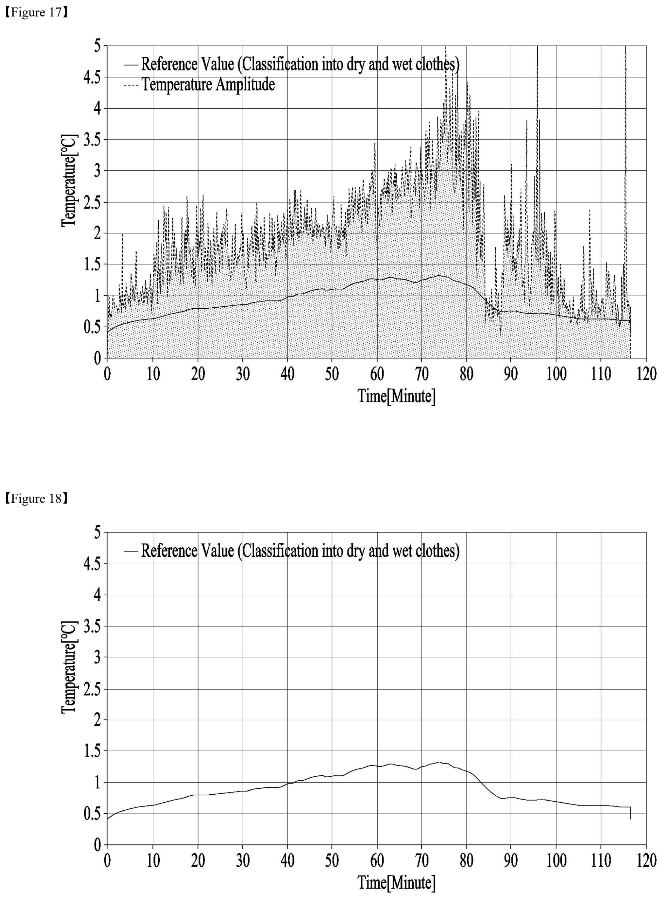

With respect to the calculated temperature amplitude as shown in FIG. 16, a reference value may be calculated as indicated by a solid line of FIG. 17 (S30). In this case, the reference value may be a value that changes over time as shown in FIGS. 17 and 18. FIG. 18 is a diagram separately showing only the reference value in FIG. 17, and in this case, the reference value may show a trend of rising and falling again as time elapses.

The clothes may be classified into dry and wet clothes using the calculated reference value. When the measured temperature amplitude of the clothes is smaller than the reference value, the corresponding clothes may be a dry cloth, but when the temperature amplitude is high, the corresponding clothes may be a wet cloth. Since the clothes still contain a lot of moisture, the measured temperature amplitude is large because the clothes are not dried enough, and thus the clothes may be determined to be a wet cloth. On the other hand, when clothes do not contain a lot of moisture, the temperature change becomes small while drying is performed, and thus the clothes may be determined to be a dry cloth because the temperature amplitude is small. In other words, in the classifying of the clothes into dry and wet clothes, when the temperature amplitude of the clothes is greater than the reference value, the clothes may be determined to be a wet cloth, and when the temperature amplitude of the clothes is smaller than the reference value, the clothes may be determined to be a dry cloth.

In this case, the reference value may be calculated according to the calculated temperature amplitude over time by a low-pass filter. The reference value calculated as drying is performed may not be fixed at a constant value, and thus the reference value may be changed depending on the drying level of the clothes, and in conclusion, the drying level of the clothes may be accurately determined.

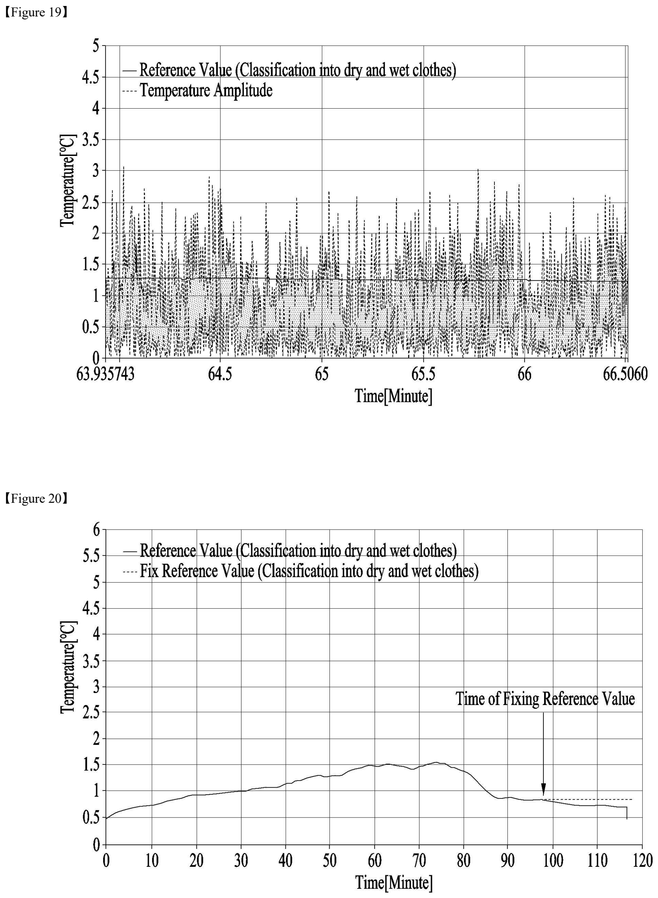

FIG. 19 is a diagram represented based on the reference value in FIG. 17. A portion with a temperature amplitude value above the reference value represented by a straight line may be determined to be a wet cloth, and a portion with a temperature amplitude value below the reference value may be determined to be a dry cloth.

As shown in FIG. 20, the reference value may be fixed after a predetermined time elapses. As shown in FIG. 20, fixing of the reference value will be supplemented later.

The first ratio may be calculated based on the reference value calculated in S30 (S40). The first ratio may be defined as a ratio of dry and wet clothes of the clothes.

The first ratio may be measured at a predetermined time interval. The first ratio may be calculated every time based on a predetermined time, that is, one cycle, and thus may be calculated while drying is performed. In addition, the first ratio may be calculated every time at the end of the predetermined time. That is, the first ratio may be calculated at a predetermined time interval, that is, at the end of one cycle, and thus the ratio of wet cloth to dry cloth may be calculated every time based on one cycle.

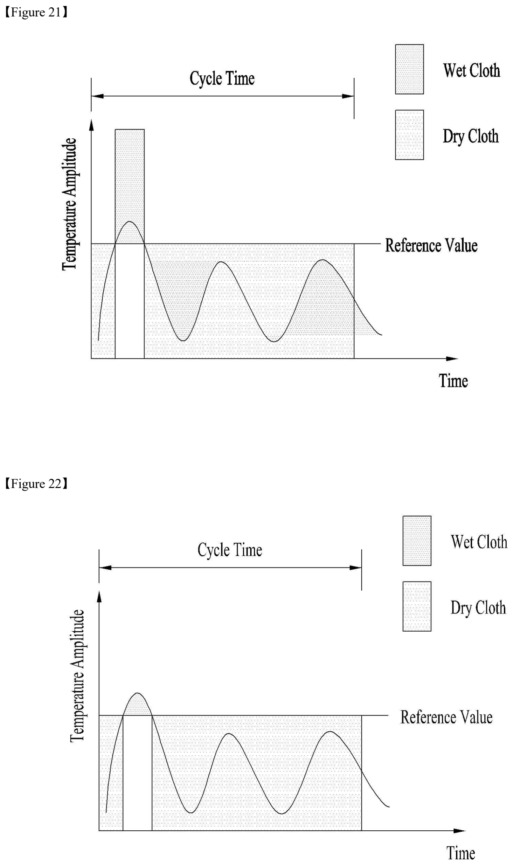

As shown in FIG. 21, the first ratio may be calculated as a time ratio of wet and dry clothes within a reference time. As shown in FIG. 21, a part having a temperature amplitude above the reference value in one cycle time may be defined as a wet cloth, and a part having a temperature amplitude below the reference value may be defined as a dry cloth. During one cycle time, the defined time for wet and dry clothes may be calculated, respectively. In this case, the first ratio may be calculated by subtracting a value obtained by dividing a time determined to correspond to a wet cloth by a time determined as a dry cloth from 1. When the first ratio is close to 1, it may be determined that the time corresponding to a wet cloth is reduced and the time corresponding to a dry cloth is increased. For reference, a portion indicated by a curve in FIG. 21 may be a value indicating the temperature amplitude of the clothes. In this way, only the time determined for a wet or dry cloth may be considered, and when the time is determined for a wet or dry cloth, the temperature amplitude may not be considered and calculation may be processed simply.

The first ratio may be calculated by subtracting a ratio of an accumulated value of the temperature amplitude of the wet and dry clothes within the reference time from 1. In detail, the first ratio may be obtained by subtracting a value obtained by dividing the accumulated value of the temperature amplitude of a wet cloth by the accumulated value of the temperature amplitude of a dry cloth from 1. According to this method, even if the clothes are determined to be wet and dry clothes, since the temperature amplitude value of the wet cloth and the temperature amplitude value of the dry cloth are used, a drying level may be determined more accurately depending on the temperature amplitude of the wet cloth and the temperature amplitude of the dry cloth. Unlike the above-described first ratio, since a temperature amplitude value is used rather than a time value, even when a time ratio is the same as in the above-described example, a different first ratio may be calculated. A change in the temperature amplitude value may be applied rather than the above-described example.

As shown in FIG. 22, the first ratio may be obtained by subtracting a value obtained by dividing the accumulate value of the temperature amplitude of the wet cloth by a value obtained by multiplying a time determined for the dry cloth and the reference value from 1. That is, a denominator may be a value obtained by multiplying the time determined for the dry cloth and the reference value, and may be calculated without considering the temperature amplitude value. On the other hand, a numerator may be determined by considering the temperature amplitude value of the part determined for the wet cloth. The first ratio calculated using the third method may be calculated without considering the temperature amplitude value in the denominator, but may be calculated by considering the temperature amplitude value in the numerator. Therefore, in the third method, the ratio of the wet cloth to the dry cloth may be calculated by considering the temperature amplitude value in the part determined for the wet cloth and further applying information during determination of the wet cloth. Accordingly, while data processing for the denominator is simplified, it may be possible to calculate a more accurate first ratio by applying a change in the value for the wet cloth.

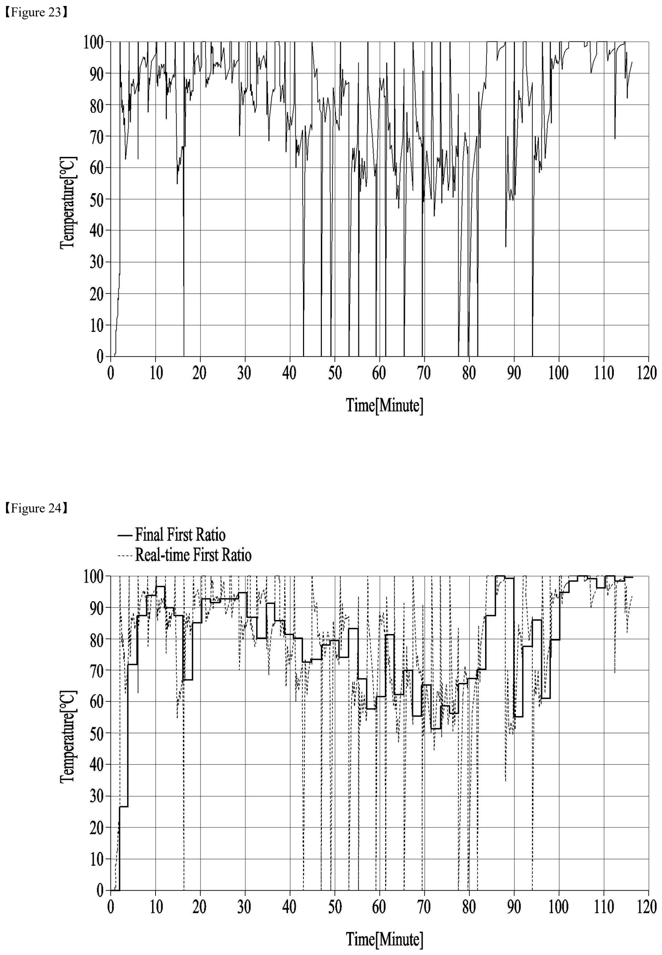

The first ratio calculated by the above-described method is shown as a value that changes over time as shown in FIG. 23. For convenience of calculation, it may be possible to determine the reference time and to calculate the first ratio for each reference time. In this case, the reference time may constitute one cycle, and the first ratio may be calculated during a plurality of cycles while drying is performed. As shown in FIG. 24, the first ratio calculated in real time may be averaged for each reference time to calculate a final first ratio value.

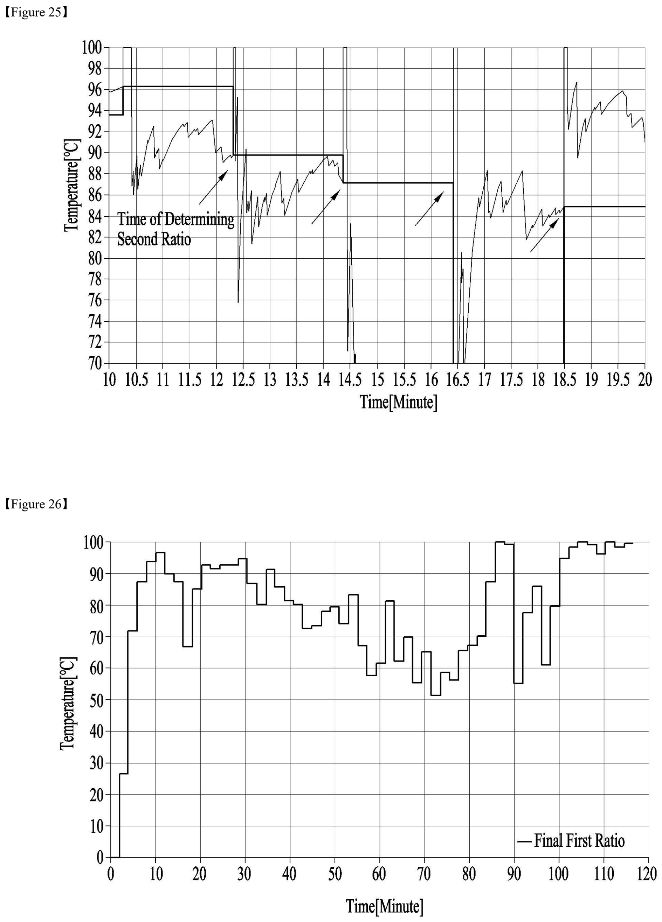

FIG. 24 shows a value obtained by changing the first ratio calculated in real time to a value obtained by averaging first ratios for respective reference times, for each reference time, and FIG. 25 is an enlarged view of a part of FIG. 24. FIG. 26 shows only a final first ratio shown in FIG. 24 separately, and shows the form in which the first ratio is calculated for each reference time.

Together with the operation of calculating the first ratio in S40, the second ratio may be calculated using the measured temperature of the clothes (S50). The second ratio may be calculated by normalizing the temperature measured by the infrared sensor 400.

The second ratio may be calculated by setting a first temperature that is a low temperature and a second temperature that is a high temperature and normalizing the measured temperature within 0 to 1 based on the first temperature and the second temperature. In this case, the first temperature and the second temperature may be set by a manufacturer that manufactures a laundry treatment apparatus or a user using the laundry treatment apparatus. It may also possible to use values measured by various sensors. The value obtained via normalization may correspond to a value close to 0 when the temperature measured by the infrared sensor is closer to the first temperature, and the value obtained via normalization may correspond to a value close to 1 when the temperature measured by the infrared sensor is closer to the second temperature.

It may be possible to set the first temperature to be lower than the measured temperature. Thus, even the low temperature measured by the infrared sensor may be matched to a value close to 0 without departing from the range of normalized values.

It may be possible to set the second temperature to be higher than the measured temperature. Thus, even the high temperature measured by the infrared sensor may be matched to a value close to 1 without departing from the range of normalized values.

The temperature measured by the infrared sensor 400 may be lower than a temperature provided from a dryer of the laundry treatment apparatus. Thus, it may be possible to set the second temperature to be similar to or lower than the temperature provided by the dryer.

It may be possible to set the first temperature to be higher than an outside temperature of the laundry treatment apparatus. Clothes may not be likely to be lowered to a temperature lower than the outside temperature of the laundry treatment apparatus. Therefore, calculation may be simplified when the second ratio is calculated by limiting the temperature range to be normalized.

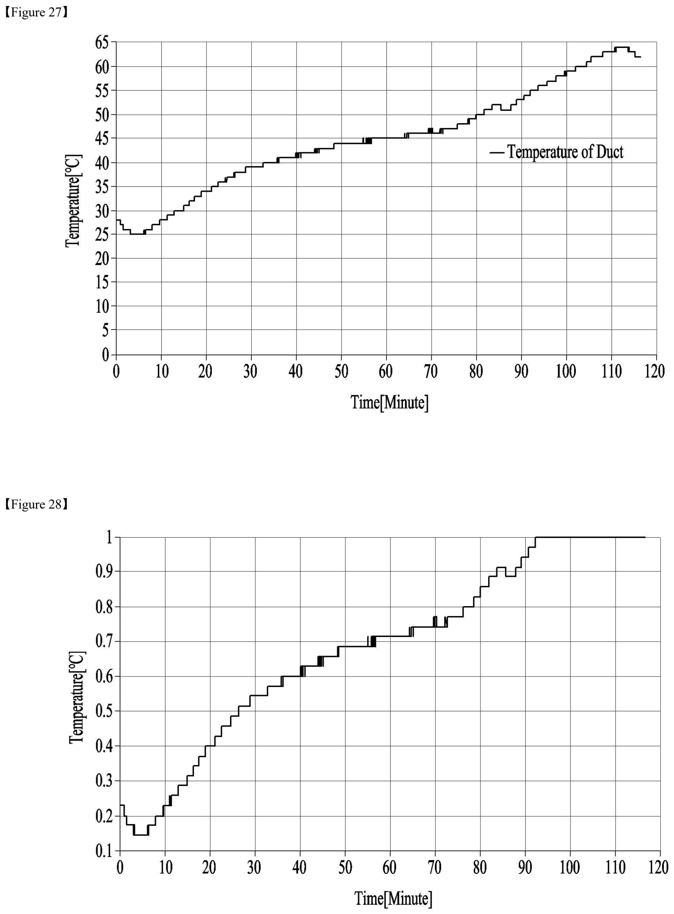

It may be possible to calculate the second ratio for each reference time by measuring the temperature of the dryer as shown in FIG. 27 instead of the infrared sensor 400. FIG. 27 shows a temperature of a duct, that is, the dryer. FIG. 28 is a diagram illustrating a second ratio calculated by normalizing the temperature measured in FIG. 27. In FIG. 28, the temperature may be normalized by setting the second temperature to 55 degrees and setting the first temperature to 20 degrees.

On the other hand, since the temperature measured using the infrared sensor is sufficiently described in FIGS. 12 to 14, data using the temperature of the dryer according to another embodiment will be described with reference to FIGS. 27 and 28. The method using the infrared sensor may be sufficiently applied by those skilled in the art as described above.

The second ratio may be used for a time point at which the reference value is fixed in FIG. 20. That is, when the second ratio is 1, the reference value may be fixed without changing over time. When the second ratio is 1, the reference value may be maintained to be the same as a reference value at the time point rather than changing according to the temperature amplitude thereafter.

When the second ratio is used, it may be possible to reduce an error of erroneously determining that drying is completed at an initial stage of drying (in a situation in which there are many wet clothes).

A drying level may be calculated by multiplying the above-described first ratio and second ratio (S60). That is, in the determining the drying level, it may be possible to multiply the first ratio and the second ratio.

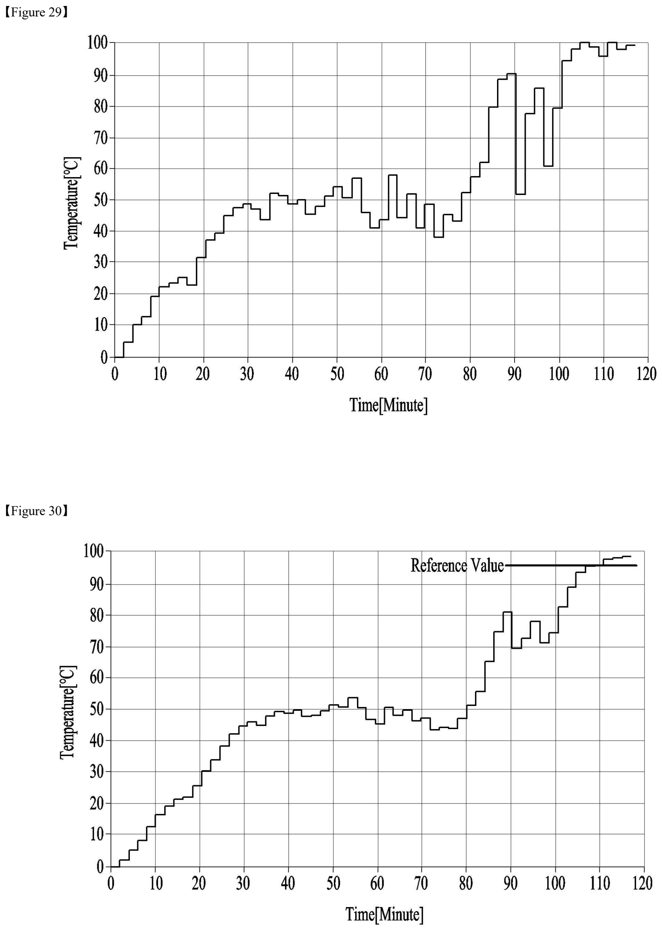

A value calculated by multiplying the first ratio and the second ratio is shown in FIG. 30.

When the calculated drying level reaches a predetermined value, it may be possible to determine that drying is completed (S70).

When the time at which the drying level reaches a predetermined value is maintained for a predetermined time, it may also be possible to determine that drying is completed. The determination is a condition that requires a predetermined time more on the premise that the drying level has reached a predetermined value.

When it is determined that drying is completed, it may be possible to terminate a drying cycle after additional drying is performed for a predetermined period of time.

As described above, it may be possible to determine the drying level of clothes using the temperature value measured using the infrared sensor. When it is determined that the clothes are sufficiently dried based on the above-described determination, it may be possible to terminal the drying cycle and to alert the user that the drying cycle has ended.

The accuracy of determination of the drying level of the clothes may be improved by considering the value obtained using the electrode sensor in addition to the temperature value obtained by measuring the drying level of the clothes.

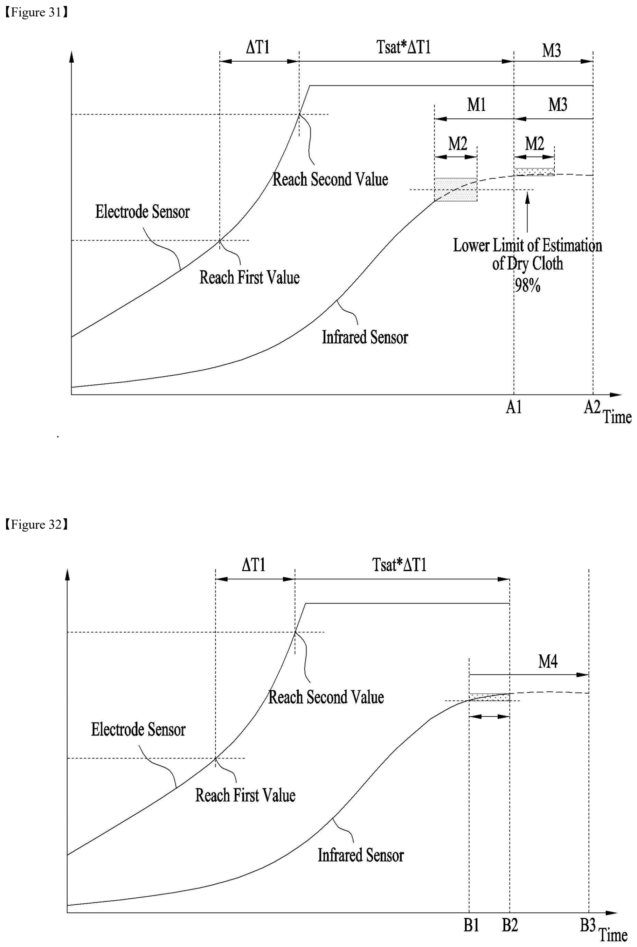

FIG. 31 is a diagram for explaining an end time of a drying cycle according to an embodiment.

The determination of the drying level of S70 in FIG. 10 may include a first determination operation of determining a drying level of clothes using the first ratio and the second ratio, and a second determination operation of determining the drying level of the clothes according to a voltage signal measured by an electrode sensor. When both the first determination operation and the second determination operation are satisfied, the determination of the drying level may be classified into a final determination operation of determining that drying is completed.

That is, according to an embodiment, whether a drying cycle is terminated may be finally determined by determining a drying level using a temperature value measured using an infrared sensor and determining a drying level using an electrode sensor. According to an embodiment of the present disclosure, since the drying level is determined using a plurality of sensors, the drying level may be accurately determined.

In the final determination operation, when any one of the first determination operation and the second determination operation is not satisfied, it may be possible to determine that the drying is not completed. That is, only when it is determined that drying is completed through the determination of the drying level based on the value measured by the infrared sensor, and it is determined that the drying is completed through the determination of the drying level based on the value measured by the electrode sensor, it may be determined that drying is finally completed.

When the drying determination process according to FIG. 31 is described, as the value measured by the electrode sensor is first dried, a time interval ΔT1 may be calculated at a time point at which the first value is reached and a time point at which the second value is reached. An end time A1 determined by the electrode sensor may be calculated by multiplying the corresponding time interval ΔT1 and a set value Tsat. In this process, when the time interval ΔT1 is increased, A1 may be delayed, and on the other hand, when the time interval ΔT1 is reduced, it may be determined that the drying level rises within a short time and A1 may be pulled.

Prior to a time M1 based on an end time A of drying determined by the electrode sensor, the drying level may be determined using the infrared sensor 400. That is, when the drying level by an infrared ray is determined from A1 prior to the time M1 and it is determined that drying is completed, the drying cycle may be terminated at the time point of A1.

Needless to say, determining of the drying level by the infrared sensor 400 may include determination under in which a high drying level is maintained not during a time from A1 to M1, but during M2 from then. That is, when a drying level is determined by an infrared sensor, if it is determined that the drying level set continuously for the time M2 time is reached, it may be possible to terminate drying at the time point A1 determined by the electrode sensor.

Even if the time point A1 is set by the electrode sensor, when it is determined that drying is not sufficiently performed by the infrared sensor at the time before M1 from the time A1, the drying end time may be changed to A2 instead of A1. In this case, it may be possible to select a time point at which a time M3 has elapsed from A1 as A2. It may be possible to determine the drying level by the infrared sensor at a time point before M2 time from the time point A2 changed by the electrode sensor. When the drying level measured by the infrared sensor remains high enough for M2 hours, it may be possible to terminate the drying cycle at the time A2.

That is, according to an embodiment, in the second determination operation, when the drying level reaches a predetermined value, an expected end time A1 may be selected.

In this case, the first determination operation may be performed before a second setting time M1 based on the expected end time A1. In the first determination operation, when the time at which the drying level reaches a predetermined value is maintained for a predetermined time M2, drying may be terminated at the expected end time A1. The expected end time A1 may be a time point at which drying is determined to be completed by the electrode sensor and drying is also determined to be completed by the infrared sensor.

In contrast, when the time at which the drying level reaches a predetermined value is not maintained for a predetermined time, the expected end time A1 may be delayed by a third setting time M3. In this case, a time from which A1 is delayed by the third setting time M3 may be A2, and as A2 becomes an expected end time again, the drying level may be determined by the infrared sensor before M1 from the time A2.

When the above-described method is used, even if the clothes are not sufficiently dried, an error of erroneously determining that drying is completed may be reduced.

FIG. 32 is a diagram for explaining an end time of a drying cycle according to another embodiment.

FIG. 32 may be the same as FIG. 31 in terms of the operation of determining that drying ends by an electrode sensor.

That is, in the second determination operation, when a drying level reaches a predetermined value, a second expected end time B2 may be selected. In this case, since the drying level is determined by the electrode sensor only, other signals may not be exchanged with the infrared sensor.

Similarly, in the first determination operation, when the time at which the drying level reaches a predetermined value is maintained for a predetermined time, a first expected end time B1 may be selected.

Based on the data, in the final determination operation, it may be determined that drying is completed at the later of the first expected end time B1 and the second expected end time B2. In this case, the time at which final drying is terminated may be a second expected end time that is the later time B2.

Unlike the above-described method, in the first determination operation, the first expected end time may be selected as a time at which the first setting time M4 has elapsed from a time at which the drying level reaches a predetermined value. Accordingly, the first expected end time point may be selected as B3. B3 may be a time point after M4 compared to B1. For reference, the first setting time M4 may be shorter than the predetermined time. That is, a sufficient time may be ensured for determining the drying level using the infrared sensor by selecting an expected end time as the later point rather than a time at which it is determined that the drying level is maintained by the infrared sensor.

Using the above-described method, a drying end time may be rapidly determined, and thus drying may be terminated faster.

The present disclosure is not limited to the above-described embodiments, and as seen from the appended claims, modifications may be made by those skilled in the art to which the present disclosure pertains, and such modifications are within the scope of the present disclosure.

Advantageous aspects of the present disclosure may be summarized as follows:

### Aspect 1

A laundry treatment apparatus comprising:
a cabinet;
a drum that is rotatably provided inside the cabinet;
a support panel provided on a front surface of the drum; and
an infrared sensor installed on the support drum, provided in a direction facing the drum, and configured to receive heat inside the drum,
wherein the infrared sensor measures a temperature inside the drum, is disposed at a center based on right and left sides of the drum, and is disposed at an upper end of the support panel.

### Aspect 2

The laundry treatment apparatus 1, wherein the infrared sensor includes:
a cover disposed on a front surface of the infrared sensor;
a sensor unit; and
a holder for fixing the sensor unit.

### Aspect 3

The laundry treatment apparatus 2, wherein the sensor unit includes:
a PCB;
a sensing unit provided in the PCB to detect an infrared ray; and
an LED for emitting light.

### Aspect 4

The laundry treatment apparatus 3, further comprising:
a controller configured to control the infrared sensor,
wherein the controller does not use the temperature detected by the sensing unit while the LED operates.

### Aspect 5

The laundry treatment apparatus 4, wherein the controller performs control using the temperature detected using the sensing unit when a predetermined time elapses after the LED operates.

### Aspect 6

The laundry treatment apparatus 3, wherein the LED is provided in a plural number.

### Aspect 7

The laundry treatment apparatus 2, wherein the cover includes a flat portion provided on a front surface thereof, and
wherein the flat portion is disposed in parallel to the sensor unit.

### Aspect 8

The laundry treatment apparatus 7, wherein the flat portion is disposed to be inclined downward, and is provided to face a rear surface of the drum.

### Aspect 9

The laundry treatment apparatus 7, wherein a recess is formed in a rear of the flat portion, and is thinner than a periphery.

### Aspect 10

The laundry treatment apparatus 7, wherein the flat portion has a flat shape.

### Aspect 11

The laundry treatment apparatus 2, wherein the cover includes a rib for fixing an installation angle of the sensor unit, and
wherein the rib includes:
a first member disposed on an upper side; and
a second member spaced apart from the first member and disposed on a lower side.

### Aspect 12

The laundry treatment apparatus 11, wherein the first member is shorter than the second member, and the sensor unit is fixed to be inclined.

### Asepct 13

The laundry treatment apparatus 2, wherein the cover includes a fixing groove, and
wherein the holder includes a protrusion inserted into the fixing groove.

### Aspect 14

The laundry treatment apparatus 2, wherein the cover is provided with a flange formed along a front circumference, and
wherein the flange surface-contact the support panel and is coupled to the support panel.

### Aspect 15

The laundry treatment apparatus 2, wherein the cover is formed of a polypropylene (PP) material and is formed via an injection process.

### Aspect 16

The laundry treatment apparatus 1, further comprising:
an electrode sensor configured to measure a voltage signal related to impedance while in contact with the clothes accommodated in the drum.

## Claims

1. A laundry treatment apparatus comprising:
a cabinet;
a drum (2) that is rotatably provided inside the cabinet;
a support panel (121) provided on a front surface of the drum; and
an infrared sensor (400) installed on the support panel, provided in a direction facing the drum, and configured to receive heat inside the drum,
wherein the infrared sensor includes a sensor unit (450), and
wherein the sensor unit (450) includes:
a PCB (454);
a sensing unit (460) provided in the PCB to detect an infrared ray; and
an LED (470) provided in the PCB for emitting light.

2. The laundry treatment apparatus 1, wherein, on the PCB (454), power is supplied to the LED (470) or a signal generated by the sensing unit (460) is be transmitted.

3. The laundry treatment apparatus 1, wherein the infrared sensor includes:
a cover (410) disposed on a front surface of the infrared sensor;
and
a holder (480) for fixing the sensor unit.

4. The laundry treatment apparatus 1, further comprising:
a controller configured to control the infrared sensor,
wherein the controller does not use the temperature detected by the sensing unit while the LED operates.

5. The laundry treatment apparatus 4, wherein the controller performs control using the temperature detected using the sensing unit when a predetermined time elapses after the LED operates.

6. The laundry treatment apparatus 3, wherein the cover includes a flat portion provided on a front surface thereof, and wherein the flat portion is disposed in parallel to the sensor unit.

7. The laundry treatment apparatus 6, wherein the flat portion is disposed to be inclined downward, and is provided to face a rear surface of the drum.

8. The laundry treatment apparatus 6, wherein a recess is formed in a rear of the flat portion, and is thinner than a periphery.

9. The laundry treatment apparatus 6, wherein the flat portion has a flat shape.

10. The laundry treatment apparatus 3, wherein the cover includes a rib for fixing an installation angle of the sensor unit, and
wherein the rib includes:
a first member disposed on an upper side; and
a second member spaced apart from the first member and disposed on a lower side.

11. The laundry treatment apparatus 10, wherein the first member is shorter than the second member, and the sensor unit is fixed to be inclined.

12. The laundry treatment apparatus 3, wherein the cover includes a fixing groove, and
wherein the holder includes a protrusion inserted into the fixing groove.

13. The laundry treatment apparatus 3, wherein the cover is provided with a flange formed along a front circumference, and
wherein the flange surface-contact the support panel and is coupled to the support panel; and/or
wherein the cover is formed of a polypropylene material and is formed via an injection process.

14. The laundry treatment apparatus 1, further comprising:
an electrode sensor configured to measure a voltage signal related to impedance while in contact with the clothes accommodated in the drum.

15. The laundry treatment apparatus 1,
wherein the infrared sensor measures a temperature inside the drum, is disposed at a center based on right and left sides of the drum, and is disposed at an upper end of the support panel.
